# EUROPÄISCHE PATENTSCHRIFT

(11) **EP 2 748 024 B1**
(45) Veröffentlichungstag und Bekanntmachung des Hinweises auf die Patenterteilung: **06.05.2015**
(21) Anmeldenummer: 12730582.9
(22) Anmeldetag: 02.07.2012
(51) Int. Cl.: B60K 13/04

(54) **TANKANORDNUNG SOWIE ABGASREINIGUNGSEINRICHTUNG**
TANK ASSEMBLY AND EXHAUST EMISSION CONTROL DEVICE
ENSEMBLE RÉSERVOIR ET DISPOSITIF D'ÉPURATION DES GAZ D'ÉCHAPPEMENT

(30) Priorität: 24.08.2011 DE 102011081489
(43) Veröffentlichungstag der Anmeldung: 02.07.2014
(73) Patentinhaber: Robert Bosch GmbH, 70442 Stuttgart (DE)
(72) Erfinder: ULRICH, Markus, 73635 Rudersberg (DE); HAEBERER, Rainer, 75015 Bretten (DE)
(86) Internationale Anmeldenummer: PCT/EP2012/062842
(87) Internationale Veröffentlichungsnummer: WO 2013/026602

(56) Entgegenhaltungen:
- DE-A1-102006 027 487
- DE-A1-102007 015 395
- DE-A1-102007 050 272
- DE-A1-102009 029 247
- US-A- 6 152 174

## Beschreibung

Die Erfindung betrifft eine Tankanordnung mit einem Tank, insbesondere für Reduktionsmittel, einer dem Tank zugeordneten Fördereinrichtung, einem in einem Innenraum des Tanks angeordneten Schwapptopf und einer Rückführleitung zur Rückführung von nicht benötigtem Fluid in Richtung des Tanks, wobei eine Ansaugleitung der Fördereinrichtung zur Förderung von Fluid aus dem Schwapptopf vorgesehen ist. Die Erfindung betrifft weiterhin eine Abgasreinigungseinrichtung.

### Stand der Technik

Tankanordnungen der eingangs genannten Art sind aus dem Stand der Technik bekannt. Sie werden üblicherweise bei Kraftfahrzeugen mit Verbrennungsmotor, insbesondere Dieselmotor, eingesetzt. Bei diesen muss aufgrund der in den nächsten Jahren anstehenden verschärften Abgasgesetzgebung unter anderem der Schadstoff NOₓ reduziert werden. Eine Methode, die dabei zur Anwendung kommt, ist das SCR-Verfahren (SCR: Selective Catalytic Reduction), bei welchem der Schadstoff NOₓ unter Zuhilfenahme von flüssigem Reduktionsmittel zu N₂ und H₂O reduziert wird. Das Reduktionsmittel ist dabei üblicherweise ein unter der Bezeichnung AdBlue bekanntes Harnstoff-Wasser-Gemisch. Das vorstehend genannte Fluid liegt insoweit als Reduktionsmittel vor und wird in dem Tank zwischengespeichert, bis es benötigt wird und beispielsweise mittels der Fördereinrichtung einem Verbraucher, insbesondere einem Dosiermodul, zugeführt werden soll.

Beispielsweise zeigt die DE 10 2006 027 487 A1 einen Fahrzeugtank für ein flüssiges, insbesondere wässriges, Reduktionsmittel, der eine aus Kunststoff hergestellte Behälterwand aufweist.

Insbesondere aufgrund von unterschiedlichen Anforderungen an das Fassungsvermögen des Tanks existiert dieser in zahlreichen verschiedenen Ausführungen, welche sich in ihrer Größe unterscheiden. Es müssen somit für jede Tankgröße ein passender Schwapptopf und eine passende Ansaugleitung zur Verfügung stehen. Das bedeutet jedoch, dass nicht nur der Tank, sondern vielmehr auch weitere Elemente, insbesondere der Schwapptopf und die Ansaugleitung, in zahlreichen Varianten vorgehalten werden müssen.

### Offenbarung der Erfindung

Demgegenüber weist die Tankanordnung mit den in Anspruch 1 genannten Merkmalen den Vorteil auf, dass die Anzahl der vorzuhaltenden Varianten des Schwapptopfes und/oder der Ansaugleitung deutlich reduziert werden kann. Dies wird erfindungsgemäß erreicht, indem die Rückführleitung mit ihrer dem Tank zugeordneten Seite unmittelbar an die Ansaugleitung angeschlossen ist. Entsprechend ist eine Rückführung des nicht benötigten Fluids nicht in den Innenraum beziehungsweise den Schwapptopf des Tanks vorgesehen, sondern vielmehr unmittelbar in die Fördereinrichtung beziehungsweise in deren Ansaugleitung. Die Ansaugleitung liegt zwischen dem Schwapptopf und der Fördereinrichtung beziehungsweise einem der Fördereinrichtung zugeordneten Fördermittel, beispielsweise einer Pumpe, vor. Sie dient dem Ansaugen von Fluid aus dem Tank mittels der Fördereinrichtung. Alternativ ist auch eine Rückführung unmittelbar in das Fördermittel realisierbar.

Auf diese Weise ist es insbesondere nicht mehr notwendig, den Schwapptopf unmittelbar unterhalb der Tanköffnung anzuordnen, damit das nicht benötigte Fluid aus dem Deckel in den Schwapptopf gelangen kann. Vielmehr mündet nun die Rückführleitung unmittelbar in die Fördereinrichtung beziehungsweise die Ansaugleitung oder das Fördermittel ein. Durch das unmittelbare Einmünden der Rückführleitung mit ihrer dem Tank zugeordneten Seite in die Fördereinrichtung kann in dem Schwapptopf kein zurückgeführtes, flüssiges Fluid auf einer Eisschicht aus gefrorenem Fluid vorliegen, welches beispielsweise durch Bewegungen des Kraftfahrzeugs aus dem Schwapptopf herausgelangen könnte. Die Rückführleitung führt vorzugsweise unmittelbar von dem Verbraucher hin zu der Fördereinrichtung beziehungsweise der Ansaugleitung.

Bei niedrigen Temperaturen beziehungsweise bei Unterschreiten einer Gefriertemperatur des Fluids kann es vorkommen, dass es in dem Tank gefriert. Für das Reduktionsmittel AdBlue liegt die Gefriertemperatur bei -11°C. Aus diesem Grund kann der Tank optional eine Heizeinrichtung, beispielsweise eine elektrische PTC-Heizung, aufweisen, welche das in dem Tank gefrorene Fluid auftaut. Die Heizeinrichtung ist dabei insbesondere dem Schwapptopf zugeordnet, welcher sich in dem Innenraum des Tanks befindet. Durch Wärmetransport, insbesondere Wärmekonvektion, verteilt sich die mittels der Heizeinrichtung in den Tank eingebrachte Wärme. Sie konzentriert sich dabei insbesondere auf den Schwapptopf beziehungsweise das in diesem befindliche Fluid. Das Fluid in dem Schwapptopf wird somit schneller auftauen als sich außerhalb des Schwapptopfes in dem Tank befindliches Fluid. Das aufgetaute Fluid wird über die Ansaugleitung der Fördereinrichtung aus dem Schwapptopf gefördert, um es nachfolgend dem Verbraucher zuführen zu können. Vorzugsweise endet das dem Tank zugewandte Ende der Ansaugleitung in dem tiefsten Punkt des Tanks beziehungsweise des Schwapptopfes. Mit Vorteil ist es dabei vorgesehen, dass auch die Ansaugleitung mittels der Heizeinrichtung unmittelbar beheizbar ist.

Die Heizeinrichtung weist bevorzugt mindestens einen Heizdraht auf, welcher aus Edelstahl beziehungsweise einer Edelstahllitze besteht. Auf diese Weise wird die Korrosionsbeständigkeit des Heizdrahts sichergestellt. Alternativ könnte der Heizdraht auch aus einem anderen Material bestehen und beispielsweise durch eine Ummantelung korrosionsgeschützt sein. Dies wird jedoch häufig wegen einer möglichen Ammoniakdiffusion durch die Ummantelung vermieden. Bevorzugt wird der Heizdraht beziehungsweise ein weiterer Heizdraht entlang der Längserstreckung der Ansaugleitung angeordnet, sodass diese über wenigstens einen Teil ihrer Längserstreckung, bevorzugt über ihre gesamte Längserstreckung, beheizbar ist. Die Ansaugleitung besteht insoweit aus einer hydraulischen Leitung und dem Heizdraht beziehungsweise bevorzugt zwei Heizdrähten. Zusätzlich kann ein die hydraulische Leitung beziehungsweise den Heizdraht umgebender Schrumpfschlauch vorgesehen sein, mittels welchem der Heizdraht an der hydraulischen Leitung zur Bildung der Ansaugleitung befestigt ist.

Die Erfindung betrifft auch einen Tankanordnungs-Einbausatz, bestehend aus mehreren Tankanordnungen, insbesondere gemäß der vorliegenden Beschreibung, mit mehreren, unterschiedliche Höhen aufweisenden Tanks sowie mehreren Schwapptöpfen und Ansaugleitungen, wobei in jedem Tank mindestens ein Schwapptopf und eine Ansaugleitung angeordnet sind. Dabei sollen die Schwapptöpfe jeweils dieselbe Höhe und/oder die Ansaugleitungen jeweils dieselbe Länge aufweisen und in Tanks unterschiedlicher Höhe anordenbar sein. Jede der Vielzahl von Tankanordnungen weist genau einen Tank auf, wobei sich die Höhen von Tanks mehrerer Tankanordnungen voneinander unterscheiden. In jedem Tank sind zumindest ein Schwapptopf und wenigstens eine Ansaugleitung angeordnet.

Eine Weiterbildung der Erfindung sieht vor, dass der Tank auf seiner Oberseite eine Tanköffnung aufweist und der Schwapptopf im Wesentlichen derart angeordnet ist, dass der Mittelpunkt des Schwapptopfs unmittelbar unter dem Mittelpunkt der Tanköffnung liegt oder in lateraler Richtung gegenüber diesem versetzt ist. Unter dem Mittelpunkt ist jeweils der geometrische Mittelbeziehungsweise Schwerpunkt in einer Schnittebene zu verstehen, welche senkrecht auf der Längsachse des Schwapptopfs beziehungsweise der Tanköffnung steht. Die Tanköffnung ist dazu vorgesehen, die Montage des Schwapptopfs in dem Innenraum des Tanks zu ermöglichen. Die Tanköffnung weist insoweit vorzugsweise wenigstens dieselben oder größere Abmessungen auf als der Schwapptopf, um ein Einbringen des Schwapptopfs durch die Tanköffnung zu ermöglichen. Der Mittelpunkt des Schwapptopfs kann nun unmittelbar unter dem Mittelpunkt der Tanköffnung liegen oder aber in lateraler Richtung gegenüber diesem versetzt sein. Bevorzugt ist dabei die versetzte Anordnung, weil diese es ermöglicht, bei unterschiedlichen Abmessungen des Tanks stets Schwapptöpfe derselben Höhe und/oder Ansaugleitungen derselben Länge verwenden zu können.

Die Anordnung des Schwapptopfs in dem Innenraum des Tanks wird derart festgelegt, dass die Ansaugleitung mit ihrer vorgegebenen Länge ohne Weiteres vollständig in dem Innenraum des Tanks angeordnet werden kann. Ist der Tank demnach vergleichsweise hoch, sodass die Länge der Ansaugleitung gerade ausreicht, um die Strecke zwischen dem Schwapptopf beziehungsweise einem Boden des Schwapptopfs und der Tanköffnung zu überbrücken, so wird der Schwapptopf unmittelbar unter der Tanköffnung angeordnet sein. Ist dagegen die Höhe des Tanks geringer, so wird der Schwapptopf entsprechend gegenüber der Tanköffnung in lateraler Richtung versetzt. Dabei bleibt zwar die Strecke in Längsrichtung zwischen dem Schwapptopf und der Tanköffnung gleich, durch die größere laterale Strecke kann jedoch die Ansaugleitung - obwohl sie für einen Tank mit größerer Höhe ausgelegt ist - ohne Weiteres in dem Tank mit geringerer Höhe angeordnet werden. Dabei kann die Ansaugleitung eine Krümmung in lateraler Richtung aufweisen, welche derart ausgelegt ist, dass ein Krümmungsradius der Krümmung größer als ein minimal zulässiger Krümmungsradius der Ansaugleitung ist.

Eine Weiterbildung der Erfindung sieht vor, dass die Tanköffnung mit einem Deckel verschlossen ist, in oder an dem die Fördereinrichtung angeordnet ist. Insbesondere das Fördermittel der Fördereinrichtung ist an dem Deckel angeordnet oder in diesen integriert. Der Deckel wird von der Ansaugleitung wenigstens teilweise durchgriffen, um sie einerseits an das Fördermittel anschließen zu können und damit sie andererseits in den Innenraum des Tanks beziehungsweise in den Schwapptopf hineinragt. Der Deckel kann beispielsweise ein Schraubdeckel sein, also mittels eines Schraubgewindes an dem Tank befestigt sein. Der Deckel kann jedoch auch zum Einstecken in die Tanköffnung ausgebildet sein und beispielsweise mittels einer Hintergriffsverbindung, insbesondere einer Schnappverbindung, an dem Tank gehalten werden.

Eine Weiterbildung der Erfindung sieht vor, dass auf einem der Tanköffnung gegenüberliegenden Boden des Tanks eine Führung für den Schwapptopf angeordnet ist. Die Führung setzt den Schwapptopf gegenüber dem Tank zumindest in lateraler Richtung fest. Zu diesem Zweck kann die Führung beispielsweise wenigstens einen Steg oder eine Schiene aufweisen, welche mit dem Schwapptopf zusammenwirkt, um eine Führung beziehungsweise Befestigung des Schwapptopfs wenigstens in lateraler Richtung zu erreichen.

Eine Weiterbildung der Erfindung sieht vor, dass die Führung wenigstens einen den Schwapptopf wenigstens bereichsweise in Umfangsrichtung umgreifenden Steg aufweist. Der Steg kann dabei ringförmig, insbesondere kreisringförmig sein. Dabei ist es nicht notwendig, dass der Steg den Schwapptopf in Umfangsrichtung durchgehend umgreift, vielmehr kann wenigstens eine Unterbrechung vorgesehen sein. Besonders bevorzugt ist jedoch das in Umfangsrichtung vollständige Umgreifen des Schwapptopfs. Auf diese Weise wird eine sichere Befestigung des Schwapptopfs in dem Tank gewährleistet. Unter einem Steg ist dabei ein Element zu verstehen, welches in Umfangsrichtung die größte Erstreckung aufweist, während die Erstreckung in radialer Richtung am geringsten ist. Gleichzeitig weist der Steg eine Höhe auf, welche ausreichend ist, um den Schwapptopf sicher zu halten. Alternativ können auch zwei zueinander parallel verlaufende gerade Stege vorliegen, die zu beiden Seiten des Schwapptopfs, insbesondere an dem Boden des Tanks, angeordnet sind.

Eine Weiterbildung der Erfindung sieht vor, dass der Steg einstückig und/oder materialeinheitlich mit einer Tankschale des Tanks ausgebildet ist. Die Tankschale schließt den Innenraum des Tanks ein. In ihr liegt auch die Tanköffnung vor, welche mittels des Deckels verschließbar ist. Um zusätzliche Schritte bei der Herstellung der Tankanordnung zu vermeiden, ist es besonders vorteilhaft, wenn die Führung beziehungsweise der Steg mit der Tankschale integriert vorliegt, also beispielsweise einstückig beziehungsweise materialeinheitlich mit dieser vorliegt. Dies ist insbesondere dann vorteilhaft, wenn die Tankschale aus Kunststoff besteht, da in diesem Fall der Steg äußerst einfach herstellbar ist.

Eine Weiterbildung der Erfindung sieht ein Federelement vor, das den Schwapptopf in Richtung des Bodens des Tanks drängt. Um den Schwapptopf in axialer Richtung festzusetzen, wird er zwischen dem Federelement und dem Boden verspannt, indem das Federelement den Schwapptopf in Richtung des Bodens drängt. Das Federelement stützt sich dabei zum einen an dem Schwapptopf und zum anderen an der dem Boden gegenüberliegenden Wand des Tanks ab. Das Federelement weist vorteilhafterweise eine Versteifung auf, welche ein Ausknicken des Federelements in lateraler Richtung verhindert, sodass das Federelement seine Federkraft ausschließlich in axialer Richtung an den Schwapptopf abgibt.

Eine Weiterbildung der Erfindung sieht vor, dass an dem Steg ein Hintergriffselement und an dem Schwapptopf ein mit dem Hintergriffselement zum Halten des Schwapptopfs zusammenwirkender Hintergriffsbereich vorgesehen ist. Eine solche Ausführungsform ist üblicherweise als Alternative zu der Verwendung des Federelements vorgesehen. Der Schwapptopf kann insoweit entweder mittels des Federelements oder mittels der Hintergriffsbefestigung in axialer Richtung in dem Tank festgesetzt sein. Beispielsweise wird das Hintergriffselement von einem freien Ende des Stegs gebildet, welches in Richtung des Schwapptopfs geneigt ist und dabei in eine lokale Vertiefung oder Verjüngung des Schwapptopfs eingreift.

Eine Weiterbildung der Erfindung sieht vor, dass auf dem Boden des Tanks und/oder an dem Steg wenigstens ein Rastelement und an dem Schwapptopf ein mit dem Rastelement rastend zusammenwirkendes Rastgegenelement vorgesehen ist. Die aus Rastelement und Rastgegenelement bestehende Rastbefestigung des Schwapptopfs ist insbesondere dazu vorgesehen, um den Schwapptopf beziehungsweise dessen Hintergriffsbereich derart, vorzugsweise in lateraler Richtung, festzusetzen, dass ein dauerhaftes Zusammenwirken des Hintergriffselements mit dem Hintergriffsbereich sichergestellt ist. Das Rastelement kann dabei entweder an dem Boden des Tanks oder an dem Steg vorgesehen sein. Auch eine gleichzeitige Anordnung von mehreren Rastelementen an dem Tank, an dem Steg oder an beiden Elementen kann vorgesehen sein.

Die Erfindung betrifft weiterhin eine Abgasreinigungseinrichtung mit einer einen Tank aufweisenden Tankanordnung, insbesondere gemäß den vorstehenden Ausführungen, und mit einer Dosiereinrichtung, der mittels einer dem Tank zugeordneten Fördereinrichtung des Tanks Fluid aus dem Tank zuführbar ist, wobei die Tankanordnung einen in einem Innenraum des Tanks angeordneten Schwapptopf und eine Rückführleitung zur Rückführung von nicht benötigtem Fluid in Richtung des Tanks aufweist und eine Ansaugleitung der Fördereinrichtung zur Förderung von Fluid aus dem Schwapptopf vorgesehen ist. Dabei soll die Rückführleitung mit ihrer dem Tank zugewandten Seite unmittelbar an die Ansaugleitung angeschlossen sein. Die Fördereinrichtung besteht, wie bereits vorstehend ausgeführt, im Wesentlichen aus dem Fördermittel und der Ansaugleitung. Die Rückführleitung ist dabei an die Ansaugleitung oder alternativ an das Fördermittel unmittelbar angeschlossen sein beziehungsweise mündet in diese ein. Die Tankanordnung kann gemäß den vorstehenden Ausführungen weitergebildet sein.

Die Erfindung wird nachfolgend anhand der in der Zeichnung dargestellten Ausführungsbeispiele näher beschrieben, ohne dass eine Beschränkung der Erfindung erfolgt. Dabei zeigen:
- Figur 1: eine Tankanordnung in einer Seitenschnittansicht,
- Figur 2: eine Seitenschnittansicht einer erfindungsgemäßen Tankanordnung, und
- Figur 3: einen Querschnitt durch einen Bereich eines Schwapptopfs und durch einen Bereich einer Tankschale eines Tanks.

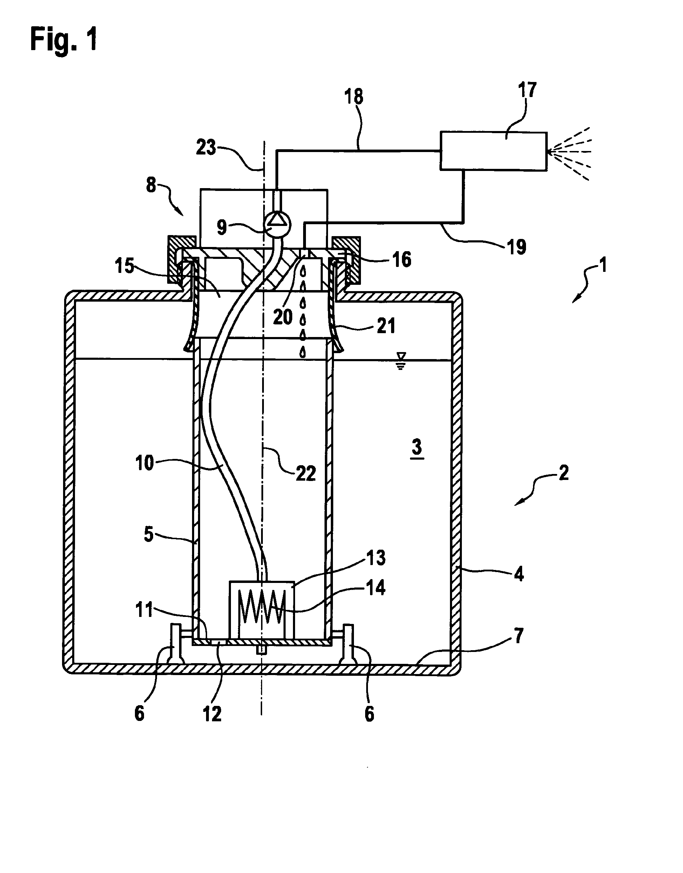

Die Figur 1 zeigt eine Seitenschnittansicht einer Tankanordnung 1 und insoweit einen Bereich einer Abgasreinigungseinrichtung. Die Tankanordnung 1 weist einen Tank 2 auf, dessen Innenraum 3 von einer Tankschale 4 eingefasst und im Wesentlichen vollständig umschlossen ist. In dem Innenraum 3 ist ein Schwapptopf 5 angeordnet, welcher mit weiteren Bereichen des Innenraums 3 fluidverbunden ist. Der Schwapptopf 5 steht über Füße 6 mit einem Boden 7 des Tanks 2 in Verbindung beziehungsweise ist über diese an dem Boden 7 befestigt. Der Tank 2 weist zudem eine Fördereinrichtung 8 auf, welche insbesondere aus einem Fördermittel 9, beispielsweise einer Pumpe, und einer Ansaugleitung 10 besteht.

Die Ansaugleitung 10 ist mit ihrem einen Ende an das Fördermittel 9 angeschlossen und kann mit ihrem anderen Ende im Bereich eines Bodens 11 des Schwapptopfes 5 in den Schwapptopf 5 einmünden. Alternativ kann sie mit ihrem anderen Ende durch einen Boden 11 des Schwapptopfs 5 in den außerhalb des Schwapptopfs 5 liegenden Bereich des Innenraums 3 einmünden. Über eine Öffnung 12, welche ebenfalls in dem Boden 11 vorliegt, steht der Schwapptopf 5 in Fluidverbindung mit dem weiteren Bereich des Innenraums 3. Dabei ist der Schwapptopf 5 beziehungsweise dessen Boden 7 mittels der Füße 6 beabstandet zu dem Boden 7 des Tanks 2 angeordnet.

In dem Schwapptopf 5 ist zusätzlich eine Heizeinrichtung 13 vorgesehen, in welcher wenigstens ein Heizdraht 14 vorliegt. Mittels der Heizeinrichtung 13 kann das in dem Tank 2, insbesondere in dem Schwapptopf 5 befindliche Fluid, beispielsweise flüssiges Reduktionsmittel, erwärmt werden. Bevorzugt ist die Heizeinrichtung 13 über die Ansaugleitung 10 elektrisch angebunden. Zu diesem Zweck weist die Ansaugleitung 10 neben einer hydraulischen Leitung auch - hier nicht dargestellte - Leitungen auf, welche außerhalb der hydraulischen Leitung an dieser befestigt sind, beispielsweise mittels eines Schrumpfschlauchs. Die Leitungen können dabei ebenfalls als Heizdraht vorliegen, sodass bei einem Aktivieren der Heizeinrichtung 13 nicht nur der Bodenbereich des Schwapptopfs 5, sondern auch die Ansaugleitung 10 beheizt ist.

Der Tank 2 weist auf seiner Oberseite eine Tanköffnung 15 auf. Diese ist mittels eines Deckels 16 verschließbar beziehungsweise verschlossen. An oder in dem Deckel 16 ist die Fördereinrichtung 8 beziehungsweise das Fördermittel 9 angeordnet. In dem hier dargestellten Ausführungsbeispiel liegt das Fördermittel 9 auf dem Deckel 16 vor. Daher durchgreift die Ansaugleitung 10 den Deckel 16, mittels welchem der Tank verschlossen ist, wenigstens teilweise, damit sie strömungstechnisch an das Fördermittel 9 angeschlossen ist, also um eine Strömungsverbindung zu dem Fördermittel 9 der Fördereinrichtung 10 herzustellen. Aus verschiedenen Gründen, insbesondere um eine ausreichende Flexibilität bei einer Deformation des Tanks 2 beispielsweise durch Eisdruck sicherzustellen, weist die Ansaugleitung 10 eine bestimmte Überlänge auf. Die Überlänge muss bei der Herstellung, weil die Ansaugleitung 10 üblicherweise, insbesondere durch den Verbund aus hydraulischer Leitung und Heizdraht, sehr steif ist, eng toleriert sein.

Mittels der Fördereinrichtung 8 ist Fluid aus dem Tank 2 und insbesondere aus dem Schwapptopf 5 in Richtung eines Verbrauchers 17, welcher beispielsweise als Dosiermodul vorliegt, förderbar. Zu diesem Zweck ist der Verbraucher 17 über eine Fluidleitung 18 an das Fördermittel 9 angeschlossen. Üblicherweise benötigt der Verbraucher 17 nicht das gesamte ihm von der Fördereinrichtung 8 zugeführte Fluid. Die Menge des nicht benötigten Fluids kann sich auf mehr als 50 % der mittels der Fördereinrichtung 8 geförderten Fluidmenge belaufen. Aus diesem Grund ist eine Rückführleitung 19 zur Rückführung von nicht benötigtem Fluid in Richtung des Tanks 2 vorgesehen. Die Rückführleitung 19 ist somit an ihrem einen Ende an den Verbraucher angeschlossen. Mit ihrer anderen Seite steht sie mit einer Rückführöffnung 20 in dem Deckel 16 in Fluidverbindung. Durch die Rückführöffnung 20 kann das nicht benötigte Fluid in den Tank 2 hineingeführt werden. Dabei soll es in den Schwapptopf 5 hineingelangen. Eine solche Ausgestaltung ist insbesondere dann vorteilhaft, wenn das in dem Tank 2 befindliche Fluid aufgrund niedriger Temperaturen gefroren ist. In diesem Fall wird mittels der Heizeinrichtung 13 das Fluid beheizt, sodass in wenigstens einem Bereich des Tanks 2 flüssiges Fluid zur Verfügung steht. Üblicherweise wird dabei jedoch nur das Fluid im Bereich der Heizeinrichtung 13 flüssig, sodass in weiteren Bereichen weiterhin gefrorenes Fluid vorliegt.

Das durch die Rückführöffnung 20 in den Tank 2 beziehungsweise den Schwapptopf 5 gelangende flüssige Fluid gerät somit auf eine in dem Schwapptopf 5 vorliegende Eisschicht aus gefrorenem Fluid. Lediglich langsam kann es entlang der Ansaugleitung 10, welche wie vorstehend beschrieben ebenfalls beheizbar ist, in Richtung des Bodens 11 des Schwapptopfes 5 fließen, um dort erneut über die Ansaugleitung 10 von dem Fördermittel 9 angesaugt zu werden. Um zu verhindern, dass das auf der Eisschicht vorliegende flüssige Fluid aus dem Schwapptopf 5 herausgelangt, nachfolgend gefriert und damit nicht mehr zur Verfügung steht, ist eine Dichtung 21 vorgesehen, welche den oberen Rand des Schwapptopfes 5 in Umfangsrichtung vollständig umgreift. Die hohlzylinderartige Dichtung 21 ist auf ihrer einen Seite an dem Deckel 16 befestigt und liegt mit ihrem anderen, freien Ende an dem oberen Rand des Schwapptopfs 5 an. Sie erstreckt sich also von der Tanköffnung 15, welche vorzugsweise mit dem Deckel 16 verschlossen ist, hin zu dem Schwapptopf 5. Auf diese Weise kann das durch die Rückführöffnung 20 in den Schwapptopf 5 gelangende Fluid nicht aus diesem herausgelangen, beispielsweise durch eine Fahrbewegung des Kraftfahrzeugs, in welchem die Tankanordnung 1 vorgesehen ist.

Die Dichtung 21 bedingt jedoch, dass der Schwapptopf 5 unmittelbar unterhalb der Öffnung 12 angeordnet ist, sodass insbesondere seine Längsachse 22 mit der Längsachse 23 der Öffnung 12 fluchtet. Anders ausgedrückt liegt der Mittelpunkt des Schwapptopfs 5 - der üblicherweise auf der Längsachse 22 liegt - unmittelbar unter dem Mittelpunkt der Tanköffnung 15 - welcher üblicherweise auf der Längsachse 23 liegt. Die Tanköffnung 15 ist insbesondere dazu vorgesehen, den Schwapptopf 5 in dem Innenraum des Tanks 2 anzuordnen. Das bedeutet jedoch auch, dass der Schwapptopf 5 und die Tanköffnung 15 in radialer Richtung - bezogen auf eine Längsrichtung des Schwapptopfes - derart zueinander angeordnet sein müssen, dass die sich ausgehend von der Tanköffnung 15 erstreckende Dichtung 21 den oberen Rand des Schwapptopfs 5 umgreifen kann. Zur Befestigung des Schwapptopfes 5 in dem Tank ist beispielsweise eine Bajonettbefestigung vorgesehen, welche insbesondere wenigstens teilweise von den Füßen 6 gebildet ist. Der Schwapptopf 5 wird also durch die Tanköffnung 15 in den Innenraum des Tanks 2 angebracht und mittels der Bajonettbefestigung ortsfest angeordnet. Anschließend wird die Tanköffnung 15 mit dem Deckel 16 verschlossen, sodass die Dichtung 21, welche beispielsweise an dem Deckel 16 befestigt ist, den Rand des Schwapptopfs 5 umgreift.

Sollen nun Tanks 2 mit unterschiedlicher Höhe realisiert werden, so ist es notwendig, stets auch den Schwapptopf 5 und die Ansaugleitung 10 an die jeweilige Größe des Tanks 2 anzupassen. Für jede Variante des Tanks 2 muss daher eine bestimmte Form des Schwapptopfs 5 und eine bestimmte Form der Ansaugleitung 10 vorgehalten werden. Dies ist jedoch relativ aufwendig.

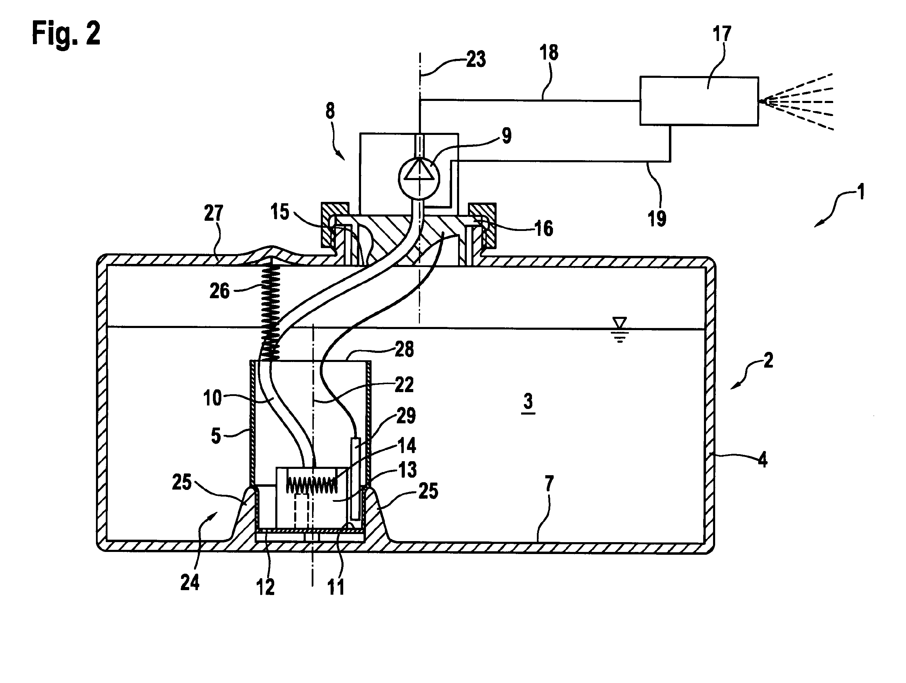

Aus diesem Grund wird die anhand der Figur 2 beschriebene Tankanordnung 1 vorgeschlagen. Diese ist grundsätzlich ähnlich aufgebaut wie die anhand der Figur 1 beschriebene, sodass auf die vorstehenden Ausführungen verwiesen wird. Die in der Figur 2 gezeigte Tankanordnung 1 unterscheidet sich zu der anhand der Figur 1 beschriebenen insoweit, als dass die Rückführleitung 19 mit ihrer dem Tank 2 zugeordneten Seite unmittelbar an die Fördereinrichtung 8 angeschlossen ist. Insofern weist der Deckel 16 keine Rückführöffnung 20 auf, durch welche Fluid von der Rückführleitung 19 in den Innenraum 3 des Tanks 2 gelangen könnte. Das nicht benötigte Fluid wird vielmehr unmittelbar dem Fördermittel 9 oder - wie in Figur 2 gezeigt - der Ansaugleitung 10 zugeführt. Dies ermöglicht es, den Schwapptopf 5 nicht mehr unmittelbar unter der Öffnung 12 anzuordnen, sondern vielmehr in lateraler Richtung gegenüber diesem versetzt.

Um den Schwapptopf 5 in dem Tank 2 zu befestigen, ist eine Führung 24 vorgesehen, die auf dem der Tanköffnung 15 gegenüberliegenden Boden 7 des Tanks 2 vorliegt. Die Führung 24 umfasst einen Steg 25, welcher den Schwapptopf 5 in Umfangsrichtung wenigstens bereichsweise umgreift. In dem in der Figur 2 dargestellten Ausführungsbeispiel ist es vorgesehen, dass der Steg 25 den Schwapptopf 5 in Umfangsrichtung vollständig umgreift und ihn damit in lateraler Richtung in den Tank 2 festsetzt. Der Steg 25 ist vorzugsweise einstückig und/oder materialeinheitlich mit der Tankschale 4 ausgebildet. Um den Schwapptopf 5 auch in axialer Richtung in dem Tank 2 festzusetzen, ist ein Federelement 26 vorgesehen, welches den Schwapptopf 5 in Richtung des Bodens 7 des Tanks 2 drängt. Das Federelement 26 weist dabei eine (nicht dargestellte) Versteifung beziehungsweise Führung auf, um ein Ausknicken zu verhindern. Es ist mit seiner einen Seite an dem Schwapptopf 5 beziehungsweise an dem Deckel des Schwapptopfs 5 befestigt und mit seiner anderen Seite an einer dem Boden 7 gegenüberliegenden Wand 27 des Tanks 2.

Der Schwapptopf 5 ist in der hier vorgestellten Form mit einem Deckel 28 verschlossen, sodass eine Fluidverbindung zwischen dem Schwapptopf 5 und weiteren Bereichen des Innenraums 3 lediglich über die Öffnung 12 vorliegt. In dem Schwapptopf 5 ist weiterhin ein Levelsensor 29 angeordnet, mittels welchem der Füllstand des Tanks 2 beziehungsweise zumindest des Schwapptopfs 5 bestimmbar ist. Vorzugsweise ist mittels des Levelsensors 29 lediglich der minimale Füllstand messbar. Der Levelsensor 29 ist seitlich an dem Schwapptopf 5 befestigt und kann über Scheiben an die entsprechende Tankform angepasst werden. Ein Kabel 30, über welches der Levelsensor 29 elektrisch angeschlossen ist, wird zu dem Deckel 16 des Tanks 2 geführt. Das Kabel 30 kann wenigstens teilweise um die Ansaugleitung 10 geschlungen werden, um eine entsprechende Festigkeit und Führung zu realisieren.

Mit der in der Figur 2 gezeigten Tankanordnung 1 kann ein Tankanordnungs-Einbausatz realisiert werden, welcher aus mehreren Tankanordnungen besteht, welche über mehrere, unterschiedliche Höhen aufweisenden Tanks und zudem mehrere Schwapptöpfe und Ansaugleitungen verfügt. In jedem Tank sollen wenigstens ein Schwapptopf und eine Ansaugleitung angeordnet sein. Trotz der unterschiedlichen Höhe der Tanks können durch die in lateraler Richtung variable Anordnung des Schwapptopfs 5 innerhalb des Tanks 3 stets Schwapptöpfe mit derselben Höhe und/oder Ansaugleitungen 10 mit derselben Länge verwendet werden. Trotz der unterschiedlichen Ausführungen der Tanks können somit ein Einheitsschwapptopf und eine Einheitsansaugleitung mit gleichbleibender Größe beziehungsweise Länge verwendet werden.

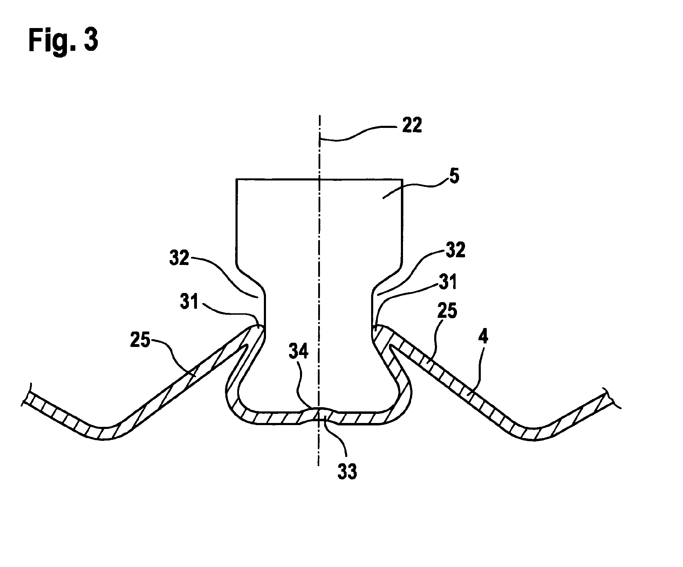

Die Figur 3 zeigt eine Seitenschnittansicht eines Bereichs des Schwapptopfs 5 und eines Bereichs der Tankschale 4. Dargestellt ist eine alternative Befestigung des Schwapptopfs 5 in dem Tank 2. Zur Befestigung des Schwapptopfs 5 sind zwei Stege 25 vorgesehen, welche auf dem Boden 7 des Tanks 2 parallel zueinander verlaufen. Diese sind, wie bereits vorstehend beschrieben, einstückig und/oder materialeinheitlich zu der Tankschale 4 ausgeführt. An den Stegen ist jeweils ein Hintergriffselement 31 vorgesehen, bevorzugt an dem freien Ende des Stegs 25. Zu diesem Zweck ist der Steg 25 in Richtung des Schwapptopfes 5 geneigt. Das Hintergriffselement wirkt mit einem Hintergriffsbereich 32 des Schwapptopfs 5 zusammen, um den Schwapptopf 5 in axialer Richtung (bezogen auf die Längsachse 22) zu halten. Bedingt durch das Zusammenwirken von Hintergriffselement 31 und Hintergriffsbereich 32 kann somit der Schwapptopf 5 nicht in axialer Richtung von dem Boden 7 entfernt werden. Dies ist lediglich möglich, indem der Schwapptopf 5 in lateraler Richtung parallel zu den Stegen 25 verlagert wird, bis diese enden. Dann gelangen die Hintergriffselemente 31 außer Eingriff mit dem Hintergriffsbereich 32 und der Schwapptopf 5 kann von dem Boden 7 entfernt werden. Der Hintergriffsbereich 32 wird beispielsweise von einer lokalen Verjüngung, also Querschnittsreduzierung, des Schwapptopfs 5 gebildet. Oberhalb und unterhalb des Hintergriffsbereichs 32 weist der Schwapptopf 5 größere Abmessungen auf als im Bereich der Verjüngung.

Um ein unbeabsichtigtes Verlagern des Schwapptopfs 5 in lateraler Richtung zu vermeiden, ist an dem Boden 7 des Tanks 2 ein Rastelement 33, beispielsweise in Form eines Vorsprungs, vorgesehen, welcher mit einem Rastgegenelement 34, beispielsweise einer Vertiefung oder einer Ausnehmung des Schwapptopfs 5, rastend zusammenwirkt. Auf diese Weise ist eine Rastbefestigung des Schwapptopfs 5 in dem Tank 2 realisiert, sodass dieser nur noch unter Aufbringung einer bestimmten Kraft in lateraler Richtung verlagerbar ist. Wird die in der Figur 3 gezeigte Befestigung des Schwapptopfs 5 in dem Tank 2 realisiert, so kann das Federelement 26, welches anhand der Figur 2 beschrieben wurde, entfallen.

## Patentansprüche

1. Tankanordnung (1) mit einem Tank (2), insbesondere für Reduktionsmittel, einer dem Tank (2) zugeordneten Fördereinrichtung (8), einem in einem Innenraum (3) des Tanks (2) angeordneten Schwapptopf (5) und einer Rückführleitung (19) zur Rückführung von nicht benötigtem Fluid in Richtung des Tanks (2), wobei eine Ansaugleitung (10) der Fördereinrichtung (8) zur Förderung von Fluid aus dem Schwapptopf (5) vorgesehen ist, **dadurch gekennzeichnet, dass** die Rückführleitung (19) mit ihrer dem Tank (2) zugeordneten Seite unmittelbar an die Ansaugleitung (10) angeschlossen ist.

2. Tankanordnung nach Anspruch 1, **dadurch gekennzeichnet, dass** der Tank (2) auf seiner Oberseite eine Tanköffnung (15) aufweist und der Schwapptopf (5) im Wesentlichen derart angeordnet ist, dass der Mittelpunkt des Schwapptopfs (5) unmittelbar unter dem Mittelpunkt der Tanköffnung (15) liegt oder in lateraler Richtung gegenüber diesem versetzt ist.

3. Tankanordnung nach einem der vorhergehenden Ansprüche, **dadurch gekennzeichnet, dass** die Tanköffnung (15) mit einem Deckel (16) verschlossen ist, in oder an dem die Fördereinrichtung (8) angeordnet ist.

4. Tankanordnung nach einem der vorhergehenden Ansprüche, **dadurch gekennzeichnet, dass** auf einem der Tanköffnung (15) gegenüberliegenden Boden (11) des Tanks (2) eine Führung (24) für den Schwapptopf (5) angeordnet ist.

5. Tankanordnung nach einem der vorhergehenden Ansprüche, **dadurch gekennzeichnet, dass** die Führung (25) wenigstens einen den Schwapptopf (5) wenigstens bereichsweise in Umfangsrichtung umgreifenden Steg (25) aufweist.

6. Tankanordnung nach einem der vorhergehenden Ansprüche, **dadurch gekennzeichnet, dass** der Steg (25) einstückig und/oder materialeinheitlich mit einer Tankschale (4) des Tanks (2) ausgebildet ist.

7. Tankanordnung nach einem der vorhergehenden Ansprüche,
**gekennzeichnet durch** ein Federelement (26), das den Schwapptopf (5) in Richtung des Bodens (7) des Tanks (2) drängt.

8. Tankanordnung nach einem der vorhergehenden Ansprüche, **dadurch gekennzeichnet, dass** an dem Steg (25) ein Hintergriffselement (31) und an dem Schwapptopf (5) ein mit dem Hintergriffselement (31) zum Halten des Schwapptopfs (5) zusammenwirkender Hintergriffsbereich (32) vorgesehen ist.

9. Tankanordnung nach einem der vorhergehenden Ansprüche, **dadurch gekennzeichnet, dass** auf dem Boden (7) des Tanks (2) und/oder an dem Steg (25) wenigstens ein Rastelement (33) und an dem Schwapptopf (5) ein mit dem Rastelement (33) rastend zusammenwirkendes Rastgegenelement (34) vorgesehen ist.

10. Abgasreinigungseinrichtung mit einer einen Tank (2) aufweisenden Tankanordnung (1), insbesondere nach einem oder mehreren der vorhergehenden Ansprüche, und mit einer Dosiereinrichtung (17), der mittels einer dem Tank (2) zugeordneten Fördereinrichtung (8) des Tanks (2) Fluid aus dem Tank (2) zuführbar ist, wobei die Tankanordnung (1) einen in einem Innenraum (3) des Tanks (2) angeordneten Schwapptopf (5) und eine Rückführleitung (19) zur Rückführung von nicht benötigtem Fluid in Richtung des Tanks (2) aufweist und eine Ansaugleitung (10) der Fördereinrichtung (8) zur Förderung von Fluid aus dem Schwapptopf (5) vorgesehen ist, **dadurch gekennzeichnet, dass** die Rückführleitung (19) mit ihrer dem Tank (2) zugewandten Seite unmittelbar an die Ansaugleitung (10) angeschlossen ist.

## Claims

1. Tank arrangement (1) having a tank (2), in particular for reducing agent, having a delivery device (8) assigned to the tank (2), having an anti-slosh pot (5) arranged in an interior space (3) of the tank (2), and having a return line (19) for returning unrequired fluid in the direction of the tank (2), wherein a suction line (10) of the delivery device (8) is provided for the delivery of fluid out of the anti-slosh pot (5), **characterized in that** the return line (19) is, by way of its side assigned to the tank (2), connected directly to the suction line (10).

2. Tank arrangement according to Claim 1, **characterized in that** the tank (2) has a tank opening (15) on its top side, and the anti-slosh pot (5) is arranged substantially such that the central point of the anti-slosh pot (5) is situated directly below, or is offset in a lateral direction with respect to, the central point of the tank opening (15).

3. Tank arrangement according to one of the preceding claims, **characterized in that** the tank opening (15) is closed by way of a cover (16) in or on which the delivery device (8) is arranged.

4. Tank arrangement according to one of the preceding claims, **characterized in that** a guide (24) for the anti-slosh pot (5) is arranged on a base (11), situated opposite the tank opening (15), of the tank (2).

5. Tank arrangement according to one of the preceding claims, **characterized in that** the guide (24) has at least one web (25) which engages around the anti-slosh pot (5) at least in regions in a circumferential direction.

6. Tank arrangement according to one of the preceding claims, **characterized in that** the web (25) is formed in one piece with and/or materially integrally with a tank shell (4) of the tank (2).

7. Tank arrangement according to one of the preceding claims, **characterized by** a spring element (26) which forces the anti-slosh pot (5) in the direction of the base (7) of the tank (2).

8. Tank arrangement according to one of the preceding claims, **characterized in that** an engage-behind element (31) is provided on the web (25), and an engage-behind region (32) is provided on the anti-slosh pot (5), which engage-behind region interacts with the engage-behind element (31) for the purpose of holding the anti-slosh pot (5).

9. Tank arrangement according to one of the preceding claims, **characterized in that** at least one detent element (33) is provided on the base (7) of the tank (2) and/or on the web (25), and a counterpart detent element (34) which interacts with detent action with the detent element (33) is provided on the anti-slosh pot (5).

10. Exhaust-gas purification device having a tank arrangement (1) which has a tank (2), in particular a tank arrangement according to one or more of the preceding claims, and having a dosing device (17) to which fluid can be fed from the tank (2) by means of a delivery device (8) of the tank (2), which delivery device is assigned to the tank (2), wherein the tank arrangement (1) has an anti-slosh pot (5) arranged in an interior space (3) of the tank (2) and has a return line (19) for returning unrequired fluid in the direction of the tank (2), and a suction line (10) of the delivery device (8) is provided for the delivery of fluid out of the anti-slosh pot (5), **characterized in that** the return line (19) is, by way of its side facing the tank (2), connected directly to the suction line (10).

## Revendications

1. Ensemble réservoir (1) comprenant un réservoir (2), en particulier pour un agent réducteur, un dispositif de refoulement (8) associé au réservoir (2), un pot anticlapotis (5) disposé dans un espace interne (3) du réservoir (2) et une conduite de retour (19) destinée à ramener le fluide non requis dans la direction du réservoir (2), une conduite d'aspiration (10) du dispositif de refoulement (8) étant prévue pour refouler du fluide hors du pot anticlapotis (5), **caractérisé en ce que** la conduite de retour (19) est raccordée directement à la conduite d'aspiration (10) par son côté associé au réservoir (2).

2. Ensemble réservoir selon la revendication 1, **caractérisé en ce que** le réservoir (2) présente une ouverture de réservoir (15) sur son côté supérieur et le pot anticlapotis (5) est disposé essentiellement de telle sorte que le centre du pot anticlapotis (5) soit situé directement en dessous du centre de l'ouverture de réservoir (15) ou soit décalé dans la direction latérale par rapport à celui-ci.

3. Ensemble réservoir selon l'une quelconque des revendications précédentes, **caractérisé en ce que** l'ouverture de réservoir (15) est fermée par un couvercle (16) dans ou sur lequel est disposé le dispositif de refoulement (8).

4. Ensemble réservoir selon l'une quelconque des revendications précédentes, **caractérisé en ce qu'**un guide (24) pour le pot anticlapotis (5) est disposé sur un fond (11) du réservoir (2) opposé à l'ouverture de réservoir (15).

5. Ensemble réservoir selon l'une quelconque des revendications précédentes, **caractérisé en ce que** le guide (24) présente au moins une nervure (25) venant en prise au moins en partie dans la direction périphérique autour du pot anticlapotis (5).

6. Ensemble réservoir selon l'une quelconque des revendications précédentes, **caractérisé en ce que** la nervure (25) est réalisée d'une seule pièce et/ou est venue de matière avec une coque de réservoir (4) du réservoir (2).

7. Ensemble réservoir selon l'une quelconque des revendications précédentes, **caractérisé par** un élément de ressort (26) qui presse le pot anticlapotis (5) dans la direction du fond (7) du réservoir (2).

8. Ensemble réservoir selon l'une quelconque des revendications précédentes, **caractérisé en ce qu'**un élément d'engagement par l'arrière (31) est prévu au niveau de la nervure (25) et une région d'engagement par l'arrière (32) coopérant avec l'élément d'engagement par l'arrière (31) pour retenir le pot anticlapotis (5) est prévue au niveau du pot anticlapotis (5).

9. Ensemble réservoir selon l'une quelconque des revendications précédentes, **caractérisé en ce qu'**au moins un élément d'encliquetage (33) est prévu sur le fond (7) du réservoir (2) et/ou sur la nervure (25) et un élément d'encliquetage conjugué (34) coopérant par encliquetage avec l'élément d'encliquetage (33) est prévu sur le pot anticlapotis (5).

10. Dispositif de purification de gaz d'échappement comprenant un ensemble réservoir (1) présentant un réservoir (2), en particulier selon l'une quelconque ou plusieurs des revendications précédentes, et comprenant un dispositif de dosage (17) auquel du fluide peut être acheminé depuis le réservoir (2) au moyen d'un dispositif de refoulement (8) du réservoir (2) associé au réservoir (2), l'ensemble réservoir (1) présentant un pot anticlapotis (5) disposé dans un espace interne (3) du réservoir (2) et une conduite de retour (19) destinée à ramener le fluide non requis dans la direction du réservoir (2) et une conduite d'aspiration (10) du dispositif de refoulement (8) étant prévue pour refouler du fluide hors du pot anticlapotis (5), **caractérisé en ce que** la conduite de retour (19) est raccordée directement à la conduite d'aspiration (10) par son côté tourné vers le réservoir (2).
